# EUROPEAN PATENT APPLICATION

(11) **EP 0 535 784 A2**
(43) Date of publication of application: **07.04.1993**
(21) Application number: 92306624.5
(22) Date of filing: 20.07.1992
(51) Int. Cl.: H04M 1/64, H04M 3/50, H04M 17/00

(54) **Message transmission system**

(30) Priority: 30.09.1991 GB 9120697
(71) Applicant: GPT LIMITED, Coventry, CV3 1HJ (GB)
(72) Inventor: Lonsdale, David William, Broad Green, Liverpool, L14 5NT (GB); Beardmore, Colin, Newcastle-U-Lyme, Staffordshire, ST5 2BT (GB)
(74) Representative: Wood, John Irwin (GB)

(57) **Abstract**

A telecommunications message transmission system includes apparatus for use with an initiating payphone telephone instrument comprising a recording/playback integrated circuit chip set and control means for commencing a procedure including recording of a message by the chip set and recording of a corresponding destingation telephone number and after a predetermined delay commencing calling of the destination telephone and playback of the message thereto when the destination telephone answers.

## Description

This invention relates to a message transmission system and is particularly applicable to a payphone transmission system where prepayment is made by use of coins or a payphone card or postpayment is made by use of a payphone chargecard. Since payphones are usually situated in locations where a customer is of a passing or itinerant type and is not available to answer a returned or incoming call unless it is immediate, it is useful for the customer to have some means for leaving a message with the called party if the party called is unable to answer or is engaged when a call is made. If the called party is not in but has an answerphone facility a message can be left but where such a facility is not available then the calling party does not have any ability to leave a message even to achieve a call back if a calling party is to be at the payphone for some time. The only ability they have is to try again.

Since most of the types of callers are in locations such as airports, railway stations or similar public places where there is often a number of people waiting to use one instrument any ability to wait for a returned call is going to inconvenience other people who are wishing to use the same instrument.

It is an object of the present invention to provide a transmission system which overcomes these disadvantages which enables the caller to leave a message without a calling party having a callback or answer facility.

According to a first aspect of the present invention there is provided a telecommunications message transmission system including apparatus for use with an initiating payphone telephone instrument comprising a recording/playback integrated circuit chip set and control means for commencing a procedure including recording of a message by the chip set and recording of a corresponding destination telephone number and after a predetermined delay commencing calling of the destination telephone and playback of the message thereto when the destination telephone answers.

Typically the control means is arranged to enable the procedure on failure of a call from the initiating telephone to the destination telephone.

There is also provided according to a second aspect of the invention a method of transmitting a message from an initiating payphone telephone to a destination telephone comprising the steps of commencing the method on failure of a call from the initiating telephone, recording a message and the telephone number of the destination telephone and calling the destination telephone after a predetermined delay and playing back the recorded message thereto.

The present invention will now be described, by way of example, with reference to the accompanying figures, in which;

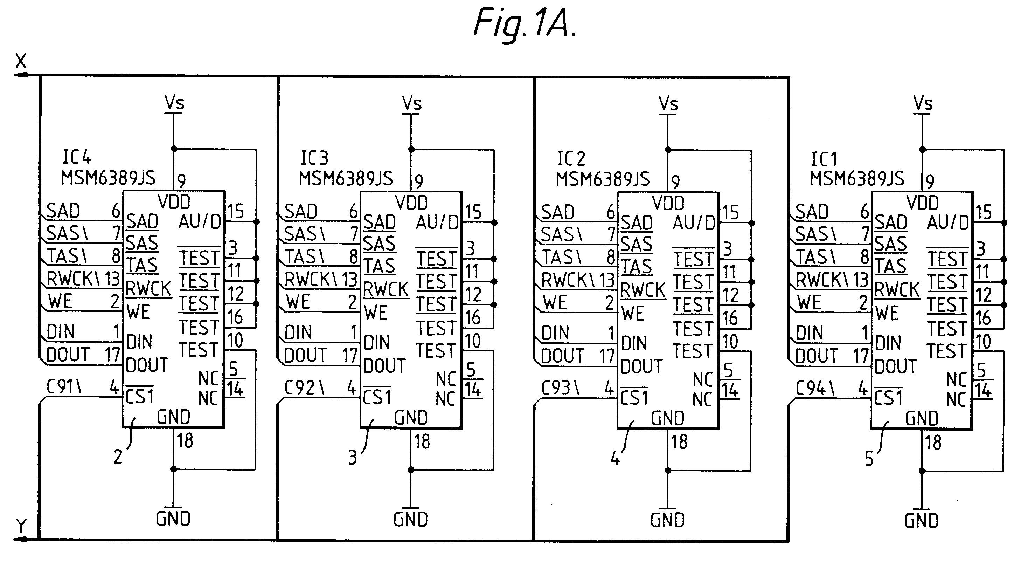

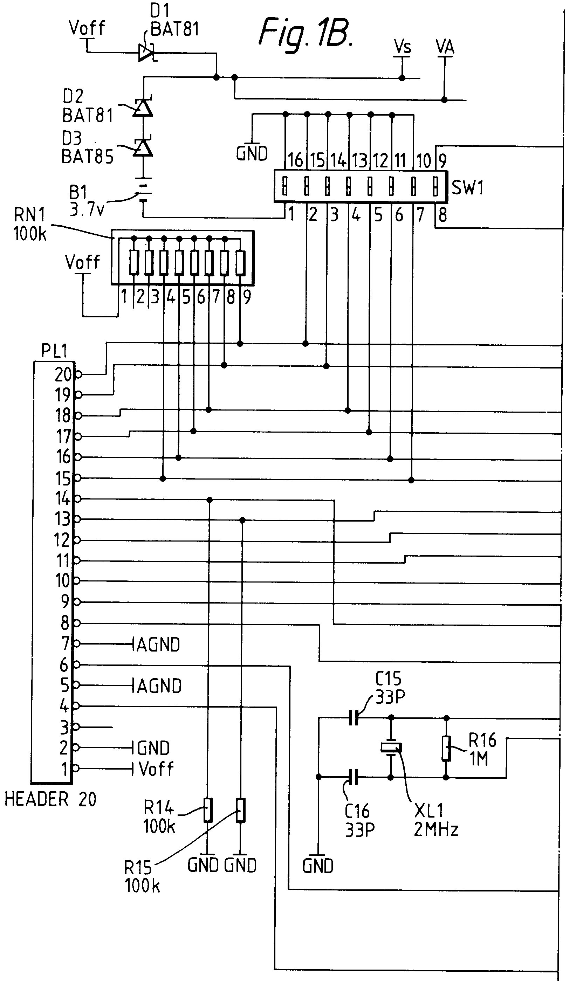

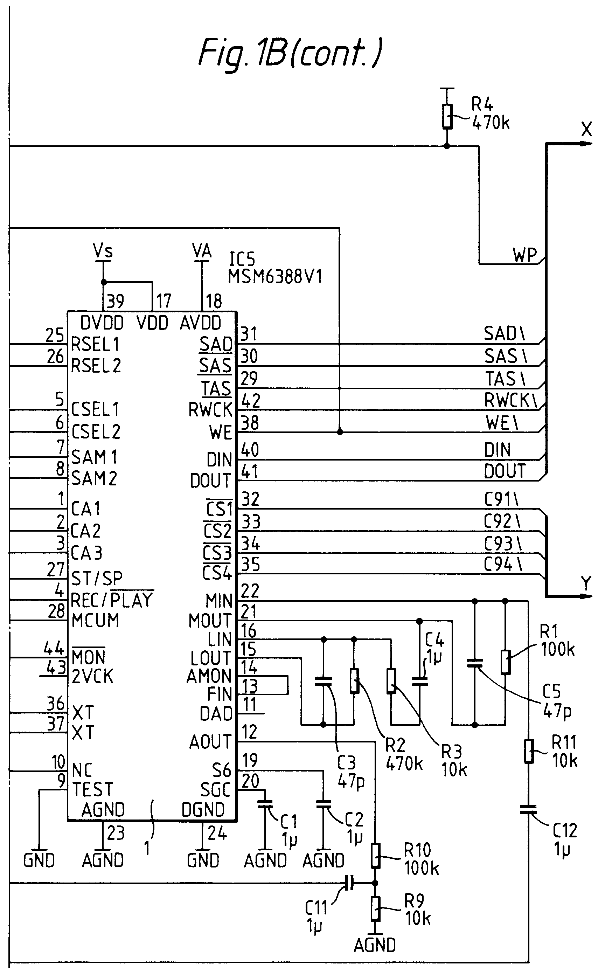

Figures 1A and 1B show a circuit including the memory and recoder respectively. The figures are from a single circuit joined as shown at X and Y.

The Payphone Leave a Message Service is a forward messaging service designed to provide a solution to the problem of an answer to a dialed number.

The service is a new facility designed to open up a new revenue earning possibility for payphone owners. It is a convenience service and does not compete with Telex, facsimile or other priority message services. This forward messaging service could be provided by exchange based equipment, but this is expensive and would require the users to pay a subscription charge.

The technology employed is similar to that used in the new generation of answer phones, which use solid state recording, rather than tape cassettes which tend to wear out and require relatively high currents for the recording/playback mechanism, two disadvantages which are overcome by solid state recording.

The service is implemented by integrating solid state voice recording/playback technology into the payphone circuitry. The hardware has access to the payphone microphone, receiver and also to the telephone line. Control of the hardware is achieved by a microprocessor in the payphone.

The idea can be implemented as shown in the drawings by a number of solid state recording/playback chip sets. A system was based on an OKI (RTM) chip, set and referred to in the accompanying drawing includes a MSM6388-V1, ADPCM SOLID STATE RECORDER 1 and four MSM6389, SOLID STATE RECORDER DATA REGISTERS 2, 3, 4, 5 respectively. The MSM6389 registers are 1 megabit serial dynamic rams, which are used to store encoded speech data. The main features of the circuit 1shown in the Figures 1A and 1B are:-
a) Selectable number of messages channels.
b) Selectable sampling rate.
c) Message selection
d) Record/playback.
e) Start/stop.

The circuit shown is for a standalone version of the system, i.e. when a MSM6389 is controlled without a microprocessor interface. A variation of the circuit involves the payphone microprocessor controlling how the memory is used and starting and stopping messages via a microprocessor interface on the device. It is also possible for the payphone microprocessor to switch in extra banks of memory to increase the message storage.

In operation, a payphone user is offered the facility at the end of a failed call, or the user can request the service by entering a specific keypad sequence. The availability of the service is made known to the user via a suitable announcement voice message from circuit 1. This guides the user to enter the required keypad sequence and to start speaking after a short tone burst. The incoming user message is picked-up from the payphone microphone and passed to the hardware to be digitised and stored in one of the registers 2,3,4 or 5. The user is then charged for the service, by the current payment method. After some time the called party is dialled and when a CSA condition is received, an announcement message is sent to line, followed by the user's recorded message, it will be possible to hear the recorded message a number of times.

While the invention has been described with reference to a payphone, this is not essential, as it could be used with a normal telephone.

Message storage can be increased by the use of suitable memory banks.

Since the system uses standard hardware it is relatively easy and inexpensive to control and operate.

## Claims

1. A telecommunications message transmission system including apparatus for use with an initiating payphone telephone instrument characterised by comprising a recording/playback integrated chip set (2, 3, 4,5,) and a control means (1) for commencing a procedure including the recording of a message by the chip set and recording of a corresponding destination telephone number and after a predetermined delay commencing calling of the destination telephone and playing back a message thereto when the called destination telephone answers.

2. A system as claimed in Claim 1 characterised in that the control means (1) is arranged to enable the procedure on failure of a call from the initiating telephone to the destination telephone.

3. A system as claimed in Claim 2 characterised in that the procedure includes a voice instruction to the initiating telephone from a recorded message in the circuit chip set (2, 3, 4, 5).

4. A method of transmitting a message from an initiating payphone telephone to a destination telephone characterised by comprising steps of commencing a method on failure of a call from the initiating telephone, recording a message and the telephone number of the destination telephone and calling the destination telephone after a predetermined delay and playing back the recorded message thereto.

5. A method as claimed in Claim 4 characterised by including the step of relaying a pre-recorded message to the initiating telephone instructing the user on how to leave a recorded message for the destination telephone.
